# EUROPEAN PATENT APPLICATION

(11) **EP 2 416 600 A1**
(43) Date of publication of application: **08.02.2012**
(21) Application number: 11006476.3
(22) Date of filing: 05.08.2011
(51) Int. Cl.: H04W 12/08, H04L 29/06

(54) **Wi-fi access method, access point and wi-fi access system**

(30) Priority: 05.08.2010 CN 201010245985
(71) Applicant: Huawei Device Co., Ltd., Longgang District Shenzhen Guangdong 518129 (CN)
(72) Inventor: Li, Jin, Shenzhen 518129 (CN)
(74) Representative: Pfenning, Meinig & Partner GbR

(57) **Abstract**

The present invention discloses a Wi-Fi access method, access point and a Wi-Fi access system. It is related to the field of communication technology and is devised for realizing the security access of a Wi-Fi device with relatively low costs. The Wi-Fi access method comprises: receiving an access request initiated by a wireless client terminal; sending an access prompt to an access point user based on the access request; receiving an access control instruction returned by the access point user; when the received access control instruction is a permitting access instruction sent by the access point user, performing access processing and establishing a Wi-Fi connection between the wireless connection terminal and the access point based on the permitting access instruction; or denying the access of the wireless client terminal based on a denying access control when the received access control instruction is the denying access instruction sent by the access point user. The present invention may cause a Wi-Fi device to access an access point (AP).

## Description

### TECHNICAL FIELD

The present invention relates to the field of communications technology, in particular to a Wi-Fi access method, an access point and a Wi-Fi access system.

### BACKGROUND ART

Since the Wireless Fidelity (Wi-Fi) technology emerges, it has been widely used in laptops, notebooks, intelligent handsets and personal navigating devices. Currently, with the increase of wireless client terminal STAs (STAtion) adopting the Wi-Fi technology, a higher requirement has been placed upon the availability of Wi-Fi hotspots. How to provide reliable and continuous Wi-Fi connections for STA users at all times and places has become a concern of operators and device vendors.

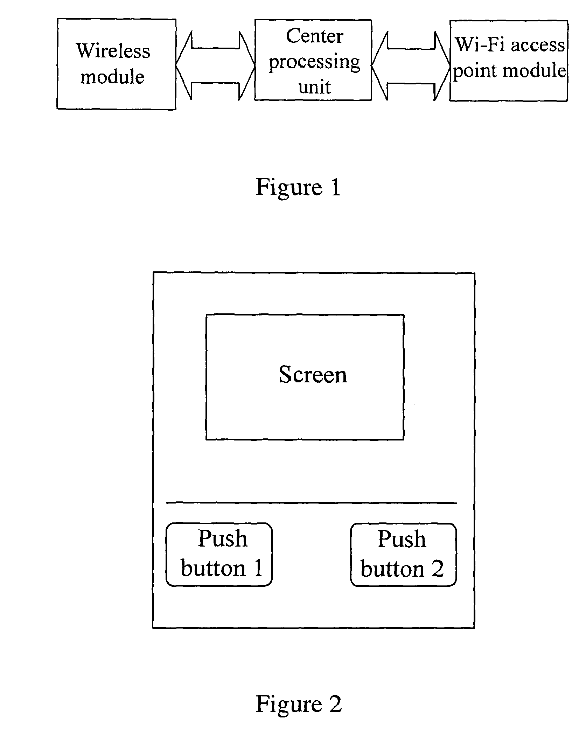

Therefore, a new generation of wireless wideband product, that is, a wireless data terminal has been developed and put to market. The functional block diagram of the wireless data terminal is shown in Figure 1. The terminal includes a wireless module, a Center Processing Unit (CPU), and a Wi-Fi access point module. The wireless module is used for connection with a wireless wide area network. The CPU is responsible for transmitting data between the wireless module and the Wi-Fi access point module. The Wi-Fi access point module is used for providing the function of an access point (AP). As such, the wireless data terminal functioning as an access point (AP) may connect an STA adopting the Wi-Fi technology to the wireless wide area network.

As shown in Figure 2, it is a diagram of the appearance of the wireless data terminal, which has a screen and a relevant push button (including push button 1 and push button 2). The screen is used for displaying various statuses of the wireless data terminal, such as the connection status of the wireless network, traffic indication, quantity of electricity remained in the battery, etc. The push button can be used to switch on/off the wireless data terminal or choose among the functions of the wireless data terminal. It should be noted that the wireless data terminal includes a battery, which can satisfy the requirement of 3 to 5 hours of net surfing. This permits the portability of the wireless data terminal. Therefore, the terminal can be brought to a place away from home for wireless network connection.

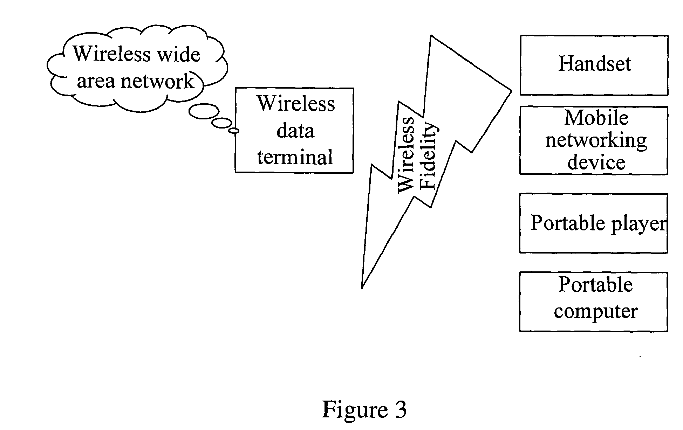

As shown in Figure 3, a networking structure of the wireless data terminal and other devices is as follows: Wi-Fi devices such as handsets, mobile networking devices access a wireless data terminal functioning as an access point (AP), through the Wi-Fi protocol, which wireless data terminal in turn access into a wireless wide area network.

The Wi-Fi protocol has defined several access security mechanisms, such as MAC address filtering mechanism, WPA mechanism and WPA2 mechanism. When adopting the MAC address filtering, only specified STA devices can access the access point (AP). When a new STA device needs temporary access, the process of finding the MAC address of the new STA device and enter the MAC address into the access point (AP) is rather complex, which makes this mechanism not easy to use. WPA and WPA2 have a PSK (per-shared key) mode. When adopting this mode multiple STAs share a common key. Therefore, there exists a risk of possible leakage and the security level of this mechanism is low. When the PSK mode is not adopted, the process of setting passwords in the access point (AP) is rather complex, which for the users is a troublesome task. Therefore, this mechanism is not easy to use, either.

Therefore, it is necessary to devise a simple and easy-to-use security mechanism based on existing access security mechanisms. Therefore, the WPS (Wi-Fi Protected Setup) technology emerges, which is a standard presented by the Wi-Fi Alliance in January of 2007 for simplifying the home network security settings. This standard permits those home users with limited knowledge of wireless network security to set Wi-Fi security access functions easily. And this standard should be supported by all STA devices which have been granted Wi-Fi authorization.

The WPS technology is mainly concerned with usability and security and takes into account the following four scenarios of a home network.

| **WPS scenario** | **Scenario description** |
|---|---|
| PIN (Personal Identification Number) | The PIN information comes from an STA. After the PIN is registered with an AP or is registered online, the STA is permitted to access the AP. |
| PBC (Push-Button Configuration) | This is a push button mode. After simultaneously pushing buttons in the AP and the STA, the device accesses the AP. |
| NFC (Near Field Communication) | The access configuration is completed using an NFC label between the STA and the AP. |
| USB (Universal Serial Bus) | A U-disk is used for communicating the access configuration information between the AP and the STA. |

In addition, a Japanese company presents an AOSS technology. The AOSS technology is a PBC mode of the WPS technology. Directly press down a button deployed in the access point (AP) and then press down a button on the STA, the connection between the AP and the STA is established. The security authentication scheme for the connection between the AP and the STA will automatically select the highest standard supported by both.

However, in implementing the above applications, the inventors find that at least the following problem exists in prior art:

Both the WPS and the AOSS technology achieve a safe and easy access by improving the Wi-Fi protocol and adding features to the Wi-Fi protocol. The direct result of this approach is that: for the access AP and the STA devices, at least a software upgrade is required to support the specifications of the WPS technology and the AOSS technology. In particular, when only the access point (AP) supports, but the STA device does not support the two technologies, neither technologies can be used. Relatively limited amounts of the access point (AP)s are deployed on the network side and the costs of upgrade are therefore relatively low. However, as the client devices at the hands of the terminal users, a large number of STA devices are in service and are disperse. It is hard for them to be uniformly upgraded and the costs of upgrade are huge. Therefore, it is necessary to devise a simple and easy-to-use method for safe access.

### SUMMARY OF THE INVENTION

The embodiments of the present invention provide a Wi-Fi access method, an access point and a Wi-Fi access system for achieving the safe access of the Wi-Fi devices with relatively low costs while the safety of the access is ensured.

To achieve the above objective, the embodiments of the present invention adopt the following technical solutions.

A Wi-Fi access method, including:
receiving an access request initiated by a wireless client terminal;
   sending an access prompt to an access point user according to the access request, where the access prompt is used to notify the access point user that the wireless client terminal initiates an access request so that the access point user determines whether to permit access of the wireless client terminal;
   receiving an access control instruction returned by the access point user;
when the received access control instruction is a permitting access instruction sent by the access point user, performing access processing according to the permitting access instruction, establishing a Wi-Fi connection between the wireless client terminal and an access point; or when the received access control instruction is a denying access instruction, denying the access of the wireless client terminal according to the denying access instruction.

An access point (AP), including:
a reception unit, configured to receive an access request initiated by a wireless client terminal or receive an access control instruction returned by an access point user;
a prompt unit, configured to send an access prompt to the access prompt user, where the access prompt is used for notifying the access point user that the wireless client terminal initiates an access request, so that the access point user determines whether to permit the access of the wireless client terminal;
   a permitting access unit, configured to perform access processing according to a permitting access instruction and establishing a Wi-Fi connection between the wireless client terminal and the access point, when the received access control instruction is a permitting access instruction sent by the access point user;
a denying access unit, configured to deny access of the wireless client terminal according to a denying access instruction when the received access control instruction is a denying instruction sent by the access point user.

A Wi-Fi access system, including the access point and the wireless client terminal; where the wireless client terminal STA is configured to initiate an access request to the access point (AP) and establish a Wi-Fi connection between the wireless client terminal and the access point (AP) when the access point (AP).

The Wi-Fi access method, access point and Wi-Fi access system that are provided by the embodiments of the present invention can send an access prompt to an access point user according to an access request initiated by a wireless client terminal, so that the access point user can determine whether to permit the access of the wireless client terminal according to the access prompt. Determining whether to permit the access of the wireless client terminal in this man-machine interaction manner ensures the security of the access and reduces the upgrade requirement the security connection places on the wireless client terminal, which makes the security Wi-Fi connection have relatively low costs.

### DESCRIPTION OF THE FIGURES

Figure 1 is a function block diagram of a wireless data terminal in prior art;
Figure 2 is a diagram of the appearance of the wireless data terminal as shown in Figure 1;
Figure 3 is a diagram of the networking structure of the wireless data terminal as shown in Figure 1;
Figure 4 is a flow chart of a Wi-Fi access method in accordance with an embodiment of the present invention;
Figure 5 is a detailed flow chart of the Wi-Fi method as shown in Figure 4 ;
Figure 6 is a diagram of an access point (AP) in accordance with an embodiment of the present invention;
Figure 7 is a detailed diagram of a structure of the access point (AP) as shown in Figure 6;
Figure 8 is a diagram of a Wi-Fi access system in accordance with an embodiment of the present invention.

### DETAILED DESCRIPTION OF THE EMBODIMENTS

In the following, reference is made to the accompany drawings to describe in detail the Wi-Fi access method, access point and Wi-Fi access system in accordance with the embodiments of the present invention. It should be noted that, the embodiments as described are only a part, but not all, of the embodiments of the present invention. All other embodiments made by those of ordinary skill in the art based on the embodiments of the present invention, without the expenditure of inventive labor, fall within the protection scope of the present invention.

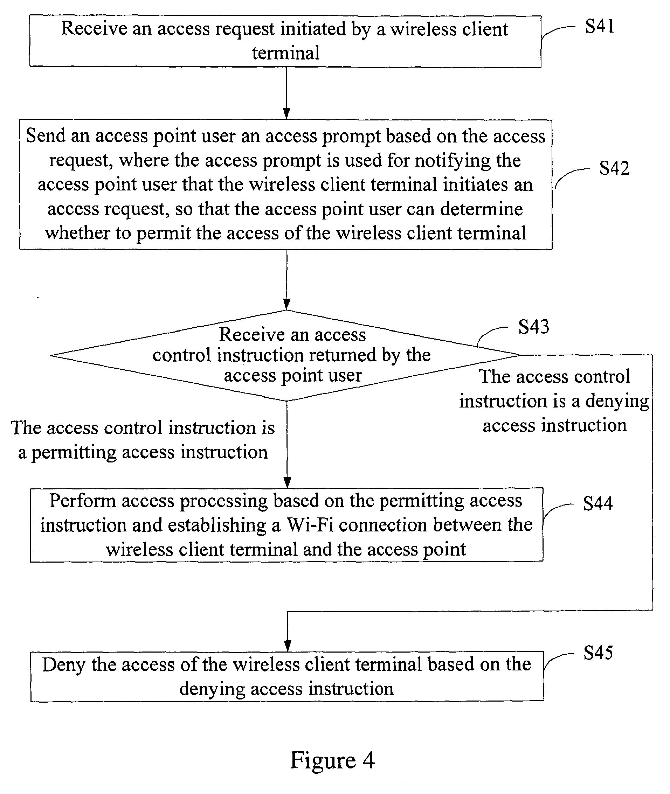

As shown in Figure 4, a Wi-Fi access method in accordance with the embodiments of the present invention includes:
S41: Receive an access request initiated by a wireless client terminal.
S42: Send an access prompt to an access point user according to the access request, where the access prompt is used for notifying the access point user that the wireless client terminal initiates an access request, so that the access point user can determine whether to permit the access of the wireless client terminal.
S43: Receive an access control instruction returned by the access point user.
   when the received access control instruction is a permitting access instruction sent by the access point user, execute step S44; when the received access control instruction is a denying access instruction, execute step S45;
S44: Perform access processing according to the permitting access instruction and establishing a Wi-Fi connection between the wireless client terminal and an access point;
S45: Deny the access of the wireless client terminal according to the denying access instruction.

The Wi-Fi access method as provided by this embodiment can send an access prompt to an access point (i.e., AP) user according to an access request initiated by a wireless client terminal (i.e., STA), so that the access point user can determine whether to permit the access of the wireless client terminal according to the access prompt. Determining whether to permit the access of the wireless client terminal in this man-machine interaction manner ensures the security of access and reduces the upgrade requirement the security connection places on the wireless client terminal, which makes the security Wi-Fi connection have relatively low costs.

In this embodiment, the implementation object of the Wi-Fi access method can be an access point (AP). Further, the Wi-Fi access method is particularly suitable for use in an access point (AP) such as a wireless client terminal which has relatively strong mobility and has more common users.

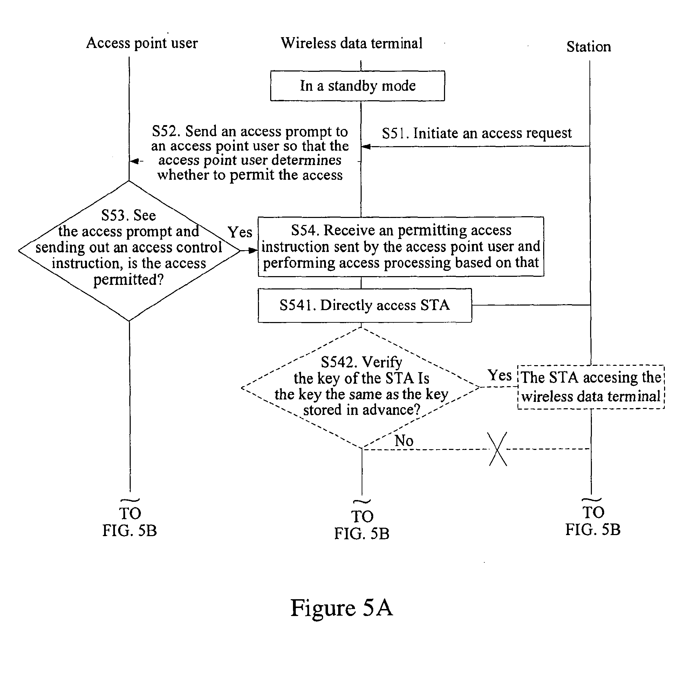

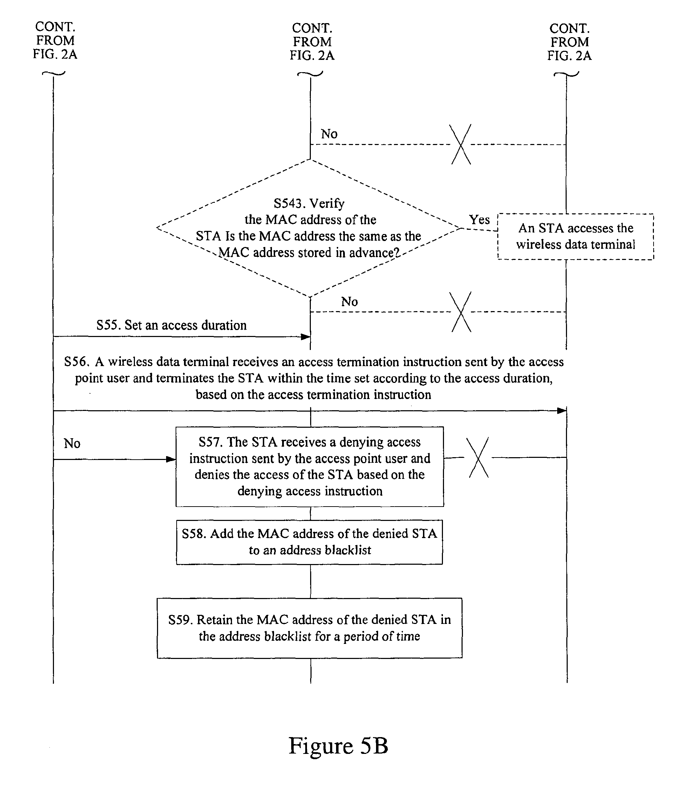

As shown in Figure 5, in the following, the Wi-Fi access method in the present invention is specifically described by taking an AP that is used as a wireless data terminal as an example. However, it should be explained that, this method also can be used in access points other than the wireless data terminal. This method includes:
S51: An STA initiates an access request to a wireless data terminal that is in a standby mode, to request accessing the wireless data terminal by way of Wi-Fi technology ;
S52: After receiving the access request initiated by the STA, the wireless data terminal sends an access prompt to an AP user (i.e., the owner of the wireless data terminal) according to the access request, where the access prompt is used for notifying the AP user that the STA initiates an access request, so that the AP user determines whether to permit the access of the STA.

The access prompt is sent out by a push button, a screen, a web page or an indicator. For example, when using a screen for sending out the access prompt, a prompt "an STA device is requesting for access, should it be permitted?" may be displayed on the screen. The AP user may know from this prompt that at present a certain device adopting the Wi-Fi technology is requesting accessing the wireless data terminal and may determine whether to permit the access of the device.
S53: The wireless data terminal receives an access control instruction returned by the AP user;

After the AP user sees the access prompt sent by the wireless data terminal, the AP user determines whether to permit the access of the STA and then sends an access control instruction to the wireless data terminal. When the access control instruction received by the wireless data terminal is a permitting access instruction sent by the AP user, that is, at the time when the AP user permits the access of the STA, execute step S54. When the access control instruction received by the wireless data terminal is a denying access instruction sent by the access point user, that is, at the time when the AP user denies the access of the STA, execute step S57.
S54: When the access control instruction received by the wireless data terminal is a permitting access instruction sent by the AP user, the wireless data terminal receives the permitting access instruction sent by the AP user, perform access processing according to the permitting access instruction, and establish a Wi-Fi connection between the wireless client terminal and an access point (AP).

Specifically, the permitting access instruction is an input provided by the AP user to the wireless data terminal. After receiving the input, the wireless data terminal can perform an action the input triggers. In actual use, the AP user can input into the wireless data terminal through a push button. For example, when the wireless data terminal sends the AP user a prompt through a screen, the AP user may input through physical a push button. When the wireless data terminal sends the AP user a prompt through a web page, the AP user may input through virtual a push button.

Specifically, after the AP user sends a permitting access instruction to the wireless data terminal, the AP user performs access processing according to the permitting access instruction. The details are as follows:
S541: The wireless data terminal directly accesses the STA which initiates the access request.

At this time, no further security access setup for the wireless data terminal is performed. For example, no encryption mechanism or MAC address filtering mechanism is set in the wireless data terminal. As such, as long as the AP user permits the STA to access the wireless data terminal, the access of the STA can be achieved without difficulties.

To further enhance the security of the access of the STA, an encryption mechanism can be set in the wireless data terminal. The encryption mechanism may be one of Wired Equivalent Privacy (WEP), WPA, and WPA2. After an encryption mechanism is set in the wireless data terminal, access processing is performed according to the permitting access instruction specifically. The details are as follows:
S542 (as indicated by a dashed line in Figure 5): Store a set of keys in the wireless data terminal in advance, the wireless data terminal verifies whether the key of the STA initiating the access request is the same as one of the set of keys stored in advance. When the key of the STA is the same as one of the set of keys stored in advance, the STA accesses the wireless data terminal. When the key of the STA is different from the set of keys stored in advance, the STA is denied accessing the wireless data terminal.

In this way, even after receiving the permitting access instruction of the AP user, the wireless data terminal does not immediately access the STA. Instead, it first verifies, according to the encryption mechanism that is set, the key of the STA to be accessed. When the result of the key verification is that the key of the STA is different from the set of keys stored in advance, the STA still cannot access the wireless data terminal, which further ensures the security access of the STA.

Alternatively, a MAC address filtering mechanism may be set in the wireless data terminal. After the MAC address filtering mechanism is set in the wireless data terminal, access processing is performed according to the permitting access instruction. The details are as follows:
S543 (as indicated by a dashed line in Figure 5): Store a set of MAC addresses in the wireless data terminal in advance, the wireless data terminal verifies whether the MAC address of the STA initiating the access request is the same as one of the set of MAC address stored in advance. When the key of the STA is the same as one of the set of keys stored in advance, the STA accesses the wireless data terminal. When the key of the STA is different from one of the set of keys stored in advance, the STA is denied accessing the wireless data terminal.

Likewise, even after receiving the permitting access instruction sent by the AP user, the wireless data terminal does not immediately access the STA. Instead, it first verifies, according to the MAC address filtering mechanism that is set, the MAC address of the STA to be accessed. When the result of the MAC address verification is that the key of the STA is different from the set of keys stored in advance, the STA still cannot access the wireless data terminal, which further ensures the security access of the STA.
S55; The wireless data terminal receives an access duration setting instruction sent by the AP user, to permit the Wi-Fi connection between the wireless client terminal and the access point within the access duration. That is, permit access of the STA within the access duration.

It should be noted that, thought the operation of setting access duration in the embodiment as shown in Figure 5 is performed after the STA accesses the wireless data terminal, the invention is not limited thereto. In other embodiments, the operation of setting access duration also can be completed before the STA initiates the access request. For example, a default value may be set for the access duration when the wireless data terminal is in a standby mode. Once the STA accesses the wireless data terminal, it will be considered by default that the STA accesses the wireless data terminal within the access duration.
S56: The wireless data terminal receives an access termination instruction sent by the AP user, and terminates, according to the access termination instruction, the Wi-Fi connection between the STA and the wireless data terminal within the time set according to the access duration. That is, after the AP user sends an access termination instruction to the wireless data terminal, the wireless data terminal terminates the access of the STA, regardless of whether the access duration set in step S35 reaches.

Apart from the embodiment shown in Figure 5, in other embodiments of the present invention, the Wi-Fi connection between the STA and the wireless data terminal can be terminated after the time set according to the access duration expires.
S57: When the access control instruction received by the wireless data terminal is a denying access instruction sent by the access point user, receive the denying access instruction sent by the AP user, and deny the access of the STA according to the denying access instruction.

When the access request initiated by the STA this time is denied, the STA may send an access request again to access the wireless data terminal.

To enhance the security of the access and simplify the operations of the AP user, generally the MAC address of the STA denied access at this time may be recorded. Next time when the STA sends out an access request again, the request for access from the STA may be automatically denied according to the recorded MAC address. Specifically,
S58: After the access of the STA is denied according to the denying access instruction in step S57, add the MAC address of the denied STA to an address blacklist.

After the MAC address of the denied STA is added to the address blacklist, when the STA again initiates an access request, the wireless data terminal does not prompt the AP user. Instead, the wireless data terminal directly denies the access of the STA.
S59: After the MAC address of the denied STA is added to the address blacklist in step S58, retain the MAC address of the denied STA in the address blacklist for a period of set time, and then delete the MAC address of the denied STA from the address blacklist.

This permits that the wireless data terminal does not deny the access of the STA for ever, but only denies the access of the STA within a period of set time. Further, after the period of set time expires, when the STA initiates an access request to the wireless data terminal, the STA still prompts the AP user so that the AP user itself determines whether to permit the access of the STA.

In sum, the Wi-Fi access method as provided by this embodiment can send an access prompt to an access point (i.e., AP) user according to an access request initiated by a wireless client terminal (i.e., STA), so that the access point user can determine whether to permit the access of the wireless client terminal according to the access prompt. Determining whether to permit the access of the wireless client terminal in this man-machine interaction manner ensures the security of the access and reduces the upgrade requirement the security access places on the wireless client terminal, which makes the security Wi-Fi access have relatively low costs.

Those of ordinary skill in the art may appreciate that all or part of the methods in the above embodiments can be implemented by a computer program instructing relevant hardware. The program can be stored in a computer accessible storage medium. When executed the program may include the flows of the above method embodiments. The storage medium may be a magnetic disk, an optical disk, a read-only memory (ROM) or a random access memory (RAM), etc.

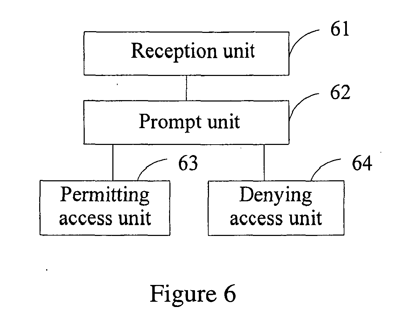

As shown in Figure 6, an embodiment of an access point (AP) is further provided. In the present embodiment, the access point (AP) includes:
a reception unit 61, configured to receive an access request initiated by a wireless client terminal or receive an access control instruction returned by the access point user;
a prompt unit 62, configured to send an access prompt to the AP user according to the access request, where the access request is used to notify the AP user that the STA initiates an access request, so that the AP user determines whether to permit the access of the STA;
a permitting access unit 63, configured to perform access processing according to a permitting access instruction and establish a Wi-Fi connection between the wireless client terminal and an access point, when the received access control instruction is the permitting access instruction sent by the AP user;
a denying access unit 64, configured to deny the access of the STA based on a denying access instruction when the received access control instruction is the denying access instruction sent by the AP user.

The access point (AP) as provided by this embodiment can send an access prompt to an access point (i.e., AP) user according to an access request initiated by a wireless client terminal (i.e., STA), so that the access point (AP) user can determine whether to permit access of the wireless client terminal according to the access prompt. Determining whether to permit the access of the wireless client terminal in this man-machine interaction manner ensures the security of the access and reduces the upgrade requirement the security access places on the STA, which makes the security Wi-Fi access have relatively low costs.

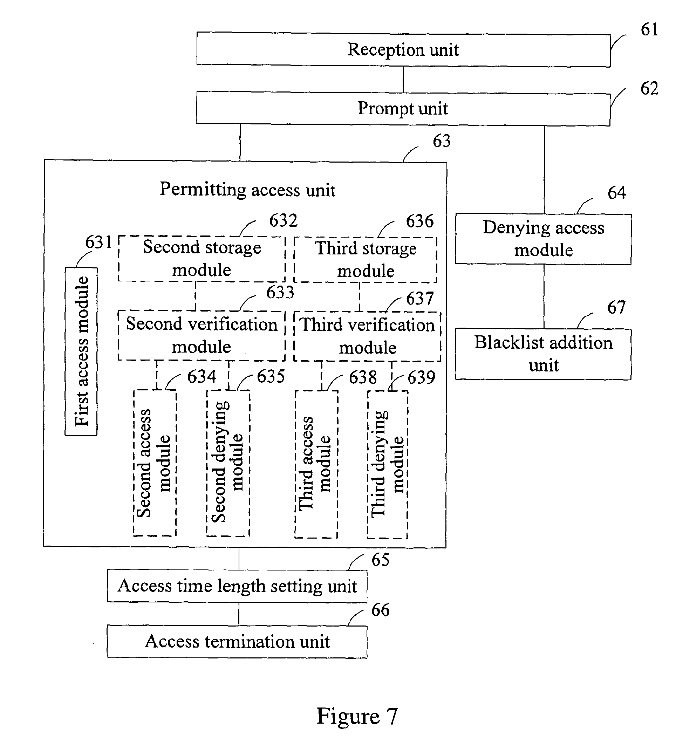

It can be known from Figure 7 that, in a specific embodiment of the present invention, the permitting access unit includes: a first access module 631, configured to directly access the STA initiating the access request. At this time, no further security access mechanism is set for the access point (AP). For example, no encryption mechanism or MAC address filtering mechanism is set in the access point (AP). As such, if only the AP user permits the STA to access the access point (AP), the access of the STA can be achieved without difficulties.

Alternatively, in another specific embodiment of the present invention, the permitting access unit 63 includes (as indicated by a dashed line in Figure 7): a second storage module 632, configured to store a set of keys in advance; a second verification module 633, configured to verify whether the key of the STA initiating the access request is the same as one of the keys stored in advance; a second access module 634, configured to access the STA when the key of the STA is the same as one of the keys stored in advance; a second denying module 635, configured to deny the access of the STA when the key of the STA is different from one of the keys stored in advance.

At this time, an encryption mechanism is set in the access point (AP). As such, even the AP user permits the access point (AP) to access the STA, the access point (AP) still verifies whether the key of the STA to be accessed is the same as one of the keys stored in advance. If the key of the STA to be accessed is different from one of the keys stored in advance, the access of the STA is denied.

Alternatively, in a specific embodiment, the permitting access unit 63 includes (as indicated by a dashed line in Figure 7): a third storage module 636, configured to store a set of MAC addresses in advance; a third verification module 637, configured to verify whether the NAC address of the STA initiating the access request is the same as one of the MAC addresses stored in advance; a third access module 638, configured to access the STA when the NAC address of the STA is the same as one of the MAC addresses stored in advance; a third denying module 639, configured to deny the access of the STA when the NAC address of the STA is different from one of the MAC addresses stored in advance.

At this time, a MAC address filtering mechanism is set in the access point (AP). As such, even the AP user permits the access point (AP) to access the STA, the access point (AP) still verifies whether the MAC address of the STA to be accessed is the same as one of the MAC addresses stored in advance. If the MAC address of the STA to be accessed is different from one of the MAC addresses stored in advance, the access of the STA is denied.

It can be learned from Figure 7 that, the access point (AP) in the present embodiment further includes: an access duration setting unit 65, configured to receive an access duration setting instruction to set the duration for accessing the STA, so that a Wi-Fi connection between the wireless client terminal and the access point is permitted to establish within the access duration, that is, the access of the STA is permitted.

In addition, the access point (AP) in the present embodiment further includes: an access termination unit 66, configured to terminate the Wi-Fi connection between the wireless client terminal and the access point after the time set according to the access duration expires, that is, terminate the access of the STA, or configured to receive an access termination instruction, and terminate the access of the STA according to the access termination instruction within the time set according to the access duration.

In the present embodiment, at the time when the AP user does not permit the access point (AP) to access a specific STA, to enhance the security of the access and simplify the operations of the AP user, generally the MAC address of the STA denied access at this time is recorded. Next time when the STA sends out an access request again, the request for access from the STA may be automatically denied according to the recorded MAC address. As such, the access point (AP) may further include: a blacklist addition unit 67, configured to add the MAC address of the STA denied according to the denying access instruction to an address blacklist.

In addition, in the present embodiment, after retaining the MAC address of the denied STA in the address blacklist for a period of set time, delete the MAC address of the denied STA from the address blacklist. Therefore, after the period of set time expires, when the STA initiates an access request to the wireless data terminal, the STA still prompts the AP user so that the AP user itself determines whether to permit the access of the STA.

It should be noted that, the prompt unit 62 in the present embodiment may include a push button, a screen, a web page, and an indicator.

In sum, the access point (AP) in present embodiment can send an access prompt to an access point (i.e., AP) user according to an access request initiated by a wireless client terminal (i.e., STA), so that the access point (AP) user can determine whether to permit the access of the STA according to the access prompt. Determining whether to permit the access of the STA in this man-machine interaction manner ensures the security of the access and reduces the upgrade requirement the security access places on the wireless client terminal, which makes the security Wi-Fi access have relatively low costs.

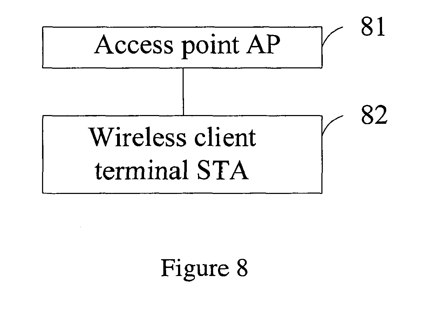

As shown in Figure 8, the present invention further provides an embodiment of a Wi-Fi access system, the Wi-Fi access system includes:
an access point (AP) 81, configured to receive an access request initiated by a wireless client terminal STA, send an access prompt to an AP user according to the access prompt, so that the AP user determines whether to permit the access of the STA; and configured to receive an access control instruction returned by the access point user, when the received access control instruction is a permitting access instruction sent by the AP user, perform access processing according to the permitting access instruction and establish a Wi-Fi connection between the STA and the AP user, and when the received access control instruction is a denying access instruction sent by the AP user, deny the access of the STA according to the denying access instruction;
a wireless client terminal STA 82, configured to initiate an access request to the access point (AP) 81, access the access point (AP) 81, and establish a Wi-Fi connection between the STA 82 and the access point (AP) 81, when the access point (AP) 81 permits the access of the STA.

The AP 81 in the embodiment of the Wi-Fi access system may be the access point (AP) as described in the aforesaid embodiment, and further details are not provided herein.

The Wi-Fi access system in the present embodiment can send an access prompt an access point (i.e., AP) user according to an access request initiated by a wireless client terminal (i.e., STA), so that the access point (AP) user can determine whether to permit the access of the STA according to the access prompt. Determining whether to permit the access of the STA in this man-machine interaction manner ensures the security of the access and reduces the upgrade requirement the security access places on the wireless client terminal, which makes the security Wi-Fi access have relatively low costs.

The foregoing are merely some specific embodiments of the present invention. However, the protection scope of the present invention is not limited to them. The alterations or replacements easily conceivable to any person of skill in the art and within the technical disclosure of the present invention shall be covered by the protection scope of the present invention. Therefore, the protection scope of the present invention shall be determined according to the protection scope of the claims.

## Claims

1. A Wi-Fi access method, **characterized in that** the method comprises:
receiving an access request initiated by a wireless client terminal;
sending an access prompt to an access point user according to the access request, wherein the access prompt is used to notify the access point user that the wireless client terminal initiates an access request, so that the access point user determines whether to permit access of the wireless client terminal;
receiving an access control instruction returned by the access point user;
when the received access control instruction is a permitting access instruction sent by the access point user, performing access processing according to the permitting access instruction and establishing a Wi-Fi connection between the wireless client terminal and an access point; or when the received access control instruction is a denying access instruction sent by the access point user, denying the access of the wireless client terminal according to the denying access instruction.

2. The Wi-Fi access method of claim 1, **characterized in that**, the sending the access prompt to the access point user according to the access request comprises:
sending, according to the access request, the access prompt to the access point user through a push button, a screen or an indicator.

3. The Wi-Fi access method of claim 2, **characterized in that**, before the receiving the access request initiated by the wireless client terminal, or after the accessing the wireless client terminal, the method further comprises:
receiving an access duration setting instruction, and permitting the Wi-Fi connection between the wireless client terminal and the access point within the access duration.

4. The Wi-Fi access method of claim 3, **characterized in that**, after the receiving the access duration setting instruction, the method further comprises:
after the time set according to the access duration expires, terminating the Wi-Fi connection between the wireless client terminal and the access point; or
receiving an access termination instruction, and terminating, according to the access termination instruction, the Wi-Fi connection between the wireless client terminal and the access point within the time set according to the access duration,.

5. The Wi-Fi access method of claim 1, **characterized in that**, after the denying the access of the wireless client terminal based on the denying access instruction, the method further comprises:
adding a Medium Access Control (MAC) address of the denied wireless client terminal to an address blacklist.

6. The Wi-Fi access method of claim 5, **characterized in that**, after the adding the MAC address of the denied wireless client terminal to the address blacklist, the method further comprises:
retaining the MAC address of the denied wireless client terminal in the address blacklist for a period of set time, and then deleting the MAC address of the denied wireless client terminal from the address blacklist.

7. An access point, **characterized in** comprising:
a reception unit, configured to receive an access request initiated by a wireless client terminal, or receive an access control instruction returned by an access point user;
a prompt unit, configured to send an access prompt to the access point user according to the access request, wherein the access prompt is used to notify the access point user that the wireless client terminal initiates an access request, so that the access point user determines whether to permit access of the wireless client terminal;
a permitting access unit, configured to perform access processing according to a permitting access instruction and establishing a Wi-Fi connection between the wireless client terminal and an access point, when the received access control instruction is a permitting access instruction sent by the access point user;
a denying access point, configured to deny the access of the wireless client terminal according to a denying access instruction when the received access control instruction is the denying access instruction.

8. The access point of claim 7, **characterized in that**, the prompt unit comprises a push button, a screen, a web page, or an indicator.

9. The access point of claim 7, **characterized in that**, the access point further comprises:
an access duration setting unit, configured to set the duration for accessing the wireless client terminal according to a received access duration setting instruction, to permit the Wi-Fi connection between the wireless client terminal and the access point within the access duration.

10. The access point of claim 9, **characterized in that**, the access point further comprises:
an access termination unit, configured to terminate the Wi-Fi connection between the wireless client terminal and the access point after the time set according to the access duration expires; or receive an access termination instruction and terminate, according to the access termination instruction, the Wi-Fi connection between the wireless client terminal and the access point within the time set according to the access duration.

11. The access point of claim 7, **characterized in that**, the access point further comprises,
a blacklist addition unit, configured to add a Medium Access Control (MAC) address of the wireless client terminal denied according to the denying access instruction to an address blacklist.

12. A Wi-Fi access system, **characterized in that**, the system comprises the access point of any one of claims 7-11 and a wireless client terminal;
wherein the wireless client terminal is configured to initiate an access request to the access point and establish a Wi-Fi connection between the wireless client terminal and an access point when the access point permits access of the wireless client terminal.
